(19) Europäisches Patentamt
European Patent Office
Office européen des brevets

(11) **EP 4 157 632 B1**

(12) **FASCICULE DE BREVET EUROPEEN**

(45) Date de publication et mention de la délivrance du brevet:
**31.01.2024 Bulletin 2024/05**

(21) Numéro de dépôt: **21732490.4**

(22) Date de dépôt: **26.05.2021**

(51) Classification Internationale des Brevets (IPC):
**B32B 17/10** $^{(2006.01)}$    **B60R 1/00** $^{(2022.01)}$

(52) Classification Coopérative des Brevets (CPC):
**B32B 17/10293; B32B 17/10036; B32B 17/10348**

(86) Numéro de dépôt international:
**PCT/FR2021/050955**

(87) Numéro de publication internationale:
**WO 2021/240112 (02.12.2021 Gazette 2021/48)**

(54) **ELEMENT VITRE, DISPOSITIF AVEC ELEMENT VITRE ET CAMERA THERMIQUE ASSOCIEE**

GLASELEMENT, VORRICHTUNG MIT GLASELEMENT UND ZUGEHÖRIGE WÄRMEBILDKAMERA

GLAZED ELEMENT, DEVICE WITH GLAZED ELEMENT AND ASSOCIATED THERMAL IMAGING CAMERA

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **28.05.2020 FR 2005625**

(43) Date de publication de la demande:
**05.04.2023 Bulletin 2023/14**

(73) Titulaire: **Saint-Gobain Glass France**
**92400 Courbevoie (FR)**

(72) Inventeurs:
• **BERARD, Mathieu**
**75019 PARIS (FR)**
• **YAVARI, Keihann**
**60280 MARGNY-LES-COMPIEGNE (FR)**
• **BRENIERE, Xavier**
**38340 VOREPPE (FR)**

(74) Mandataire: **Saint-Gobain Recherche**
**Département Propriété Industrielle**
**39 Quai Lucien Lefranc**
**93300 Aubervilliers (FR)**

(56) Documents cités:
**DE-A1-102007 012 993    GB-A- 2 271 139**

**Description**

L'invention se rapporte à un vitrage de véhicule en particulier un pare-brise, un dispositif avec un tel vitrage, une caméra thermique pour une visualisation d'informations.

Les vitrages de véhicules et la technologie associée évoluent constamment, notamment pour améliorer la sécurité.

En particulier le brevet GB2271139 propose un pare-brise comportant un vitrage feuilleté avec, dans une partie centrale et proche du bord longitudinale supérieur, une ouverture comblée par un insert en matériau hautement transparent aux infrarouges thermiques, plus précisément en sulfure de zinc (ZnS) de transmission d'au moins 50% de 5 à 15$\mu$m. Une caméra thermique dédiée couplée à un écran visible par le conducteur est dans l'habitacle en face de l'insert. Le trou est circulaire et l'insert est un disque collé aux parois du trou.

En termes de fabrication, le trou est fabriqué avant passage en autoclave du verre de pare-brise.

Les performances de détection d'objet ou de personnes d'un tel dispositif peuvent être améliorées.

A cet effet, la présente invention se rapporte à un élément vitré qui comprend :

- un vitrage (notamment feuilleté et/ou bombé) de véhicule, notamment automobile (voiture, camion, transport en commun : bus, car etc) ou ferroviaire (en particulier à vitesse maximale d'au plus 90km/h ou d'au plus 70km/h, en particulier les métros, tramway), en particulier pare-brise, lunette arrière, vitrage latéral, d'épaisseur E1 donnée (subcentimétrique notamment d'au plus 5mm pour un pare-brise automobile), vitrage ayant une face principale externe (dite F1) destinée à être orientée vers l'extérieur (orientée vers l'extérieur en position montée) et une face principale (la plus) interne destinée à être côté habitacle, -côté habitacle en position montée- (face dite F4 si vitrage feuilleté ou dite F2), vitrage comportant, de préférence dans une zone périphérique de préférence qui est en partie supérieure du vitrage (de préférence en bord longitudinal supérieur notamment dans une région centrale de la partie supérieure), un trou traversant entre la face interne et la face externe, trou délimité par une paroi latérale du vitrage, notamment trou débouchant formant une encoche périphérique ou trou fermé (entouré par la paroi), en particulier le trou de diamètre constant ou un diamètre plus large en face intérieure qu'en face extérieure, notamment de section droite convexe en particulier circulaire ou ovale ou ellipsoïdale ou encore rectangulaire, carrée ou hexagonale, en particulier diamètre d'au plus 40mm ou 35mm (supérieure ou égal au diamètre constant ou variable de l'insert)
- dans ledit trou traversant, un insert en matériau transparent dans une plage LB de longueurs d'onde dans le spectre infrarouge au-delà de 2,5$\mu$m, allant au moins de 9,5 à 10,5$\mu$m et de préférence de 8 à 12$\mu$m, l'insert étant en matériau d'indice de réfraction n dans la plage LB, notamment de 1,35 à 4,5 avec une face intérieure -destinée à être orientée ou orientée habitacle en position montée- et une face extérieure -(notamment affleurant ou en retrait de la face externe) destinée à être orientée ou orientée vers l'extérieur en position montée-.

Les faces intérieure et extérieure (non parallèles, de préférence planes) de l'insert forment un angle au sommet A non nul, l'insert ayant une épaisseur e variable diminuant en direction du bord supérieur du vitrage (bord du vitrage le plus éloigné du sol, notamment bord longitudinal en particulier d'un pare-brise) - en position montée (sur le véhicule)- notamment le vitrage présentant une inclinaison définie par un angle $\alpha$ par rapport à l'horizontale (en position montée).

L'épaisseur e est de préférence d'au plus 1cm ou subcentimétrique en particulier dans une gamme allant de 3 à 10mm. On peut définir e1 l'épaisseur minimale, en bordure supérieure (la plus éloignée du sol) et e2 maximal en bordure inférieure (la moins éloignée du sol) -.

L'insert (aminci vers le haut) selon l'invention permet de dévier les rayons vers le bas, déviation dont la valeur dépend de l'angle d'incidence des rayons sur l'insert, a pour effet d'augmenter le champ de vue vertical de la caméra thermique. Le champ de vue horizontal de la caméra thermique n'est pas modifié.

L'insert selon l'invention permet d'augmenter le champ de vue vertical de la caméra thermique, en particulier vers le bas, et permet donc d'avoir un champ de vue vertical final ou effectif (défini après réfraction par l'insert) large même à partir d'un petit champ de vue initial de la caméra thermique ce qui permet d'utiliser un insert plus petit qu'un insert à faces parallèles et/ou une caméra thermique avec un champ de vue faible et donc susceptible d'être moins onéreuse et/ou plus compacte et donc plus facile d'intégration.

Avantageusement, la face intérieure forme un angle A0 non nul avec (le plan local de) la face interne, en particulier A0 vaut A±2°, et/ou la face extérieure est dans un plan parallèle ou coplanaire avec (le plan local de) la face externe ou formant un angle d'au plus 2° avec (le plan local de) la face externe. De préférence A0 égal à A et/ou la face extérieure est coplanaire avec la face externe. De préférence, A est d'au moins 2° et d'au plus 30°.

Autrement dit la diminution d'épaisseur de l'insert vers le haut (en s'écartant du sol) est de préférence obtenue par la forme en biseau de la face intérieure qui peut tout ou partie être en saillie de la face interne.

La face extérieure de préférence peut affleurer (du plan local de) de la face externe du vitrage -dans la zone adjacente à l'insert- (donc localement la face extérieure et la face externe sont coplanaires) ou être en retrait (du plan local de) de la face externe du vitrage -dans la zone adjacente à l'insert- notamment d'au plus 1mm (localement la face extérieure et la face externe sont dans des plans de préférence parallèles ou confondus). L'insert étant de préférence de forme générale circulaire ou quasi-circulaire. La face extérieure est de préférence circulaire ou quasi-circulaire. La face intérieure est de préférence circulaire ou quasi-circulaire notamment ellipsoïdale.

Le diamètre de la face extérieure de l'insert peut être d'au plus 35mm ou 25mm et notamment d'au moins 5mm ou 8mm.

La face extérieure de l'insert peut être inscrite dans un rectangle (carré inclus) de largeur Wi et hauteur Di avec rapport de forme Di/Wi d'au moins 0,8 ou 0,9 et d'au plus 1,1 ou 1,2, de préférence Di égal à Wi, avec Di d'au plus 35mm ou 25mm, notamment d'au moins 5mm ou 8mm, définissant un centre M' qui est l'intersection des diagonales dudit rectangle.

Le diamètre de la face intérieure de l'insert peut être d'au plus 35mm ou 25mm et notamment d'au moins 5mm ou 8mm.

La face intérieure de l'insert peut (aussi) être inscrite dans un rectangle (carré inclus) définissant un centre M qui est l'intersection des diagonales dudit rectangle.

La face intérieure de l'insert peut, au point le plus haut (éloigné du sol), émerger de la face interne (ou être affleurant), et au point le plus bas (proche du sol) affleurer de la face interne du vitrage (ou être en retrait notamment d'au plus 5mm).

De préférence entre (la face latérale de) l'insert et la paroi latérale délimitant le trou du vitrage, il y a des moyens de fixation de l'insert (et également de préférence d'étanchéité à l'eau liquide voire gazeuse), notamment comportant un joint, un anneau en matière polymère organique (ou hybride organique inorganique) et/ou souple, par exemple polycarbonate. L'anneau peut être collé à la paroi latérale. L'insert peut être également collé à la paroi latérale directement.

Naturellement de préférence la face latérale de l'insert en regard de la paroi latérale du vitrage présente une épaisseur suffisante pour faciliter le maintien, par exemple d'au moins 3mm (vers le haut du vitrage).

La section transversale de l'insert (passant par un plan perpendiculaire aux faces intérieure et extérieure en passant par M et M') est par exemple en forme de quadrilatère.

Pour préciser la position de la caméra thermique par rapport à l'insert, on peut définir une droite de centrage définie comme étant la projection dans le plan de la face interne du vitrage de la droite verticale passant par ce centre M, (cette droite va du bord haut au bord bas du vitrage divisant ainsi en 2 zones la face intérieure). La caméra thermique peut être positionnée de sorte que (ou « est centrée » au sens où), l'axe optique X impacte la face intérieure à moins de 5mm ou 2mm de la droite de centrage.

L'angle $\alpha$ du vitrage par rapport à l'horizontale notamment un pare-brise de véhicule routier peut être typiquement entre 21 ° et 36° par rapport au sol.

Dans la présente description en position montée désigne en position montée dans le véhicule notamment routier.

Concernant le matériau de l'insert, la plage LB va de $9,5\mu m$ à $10,5\mu m$, de préférence de 8 à $12\mu m$ ou $13\mu m$. De préférence le matériau de l'insert présente une transmission optique infrarouge (infrared optical transmission en anglais) d'au moins 30% ou d'au moins 40% et mieux d'au moins 60%, 65% ou 70% dans cette plage LB.

Selon l'invention, en outre, le matériau de l'insert peut être le germanium ou un ZnS (classique).

Selon l'invention, en outre, le matériau de l'insert peut être transparent dans le visible à une longueur d'onde de référence comprise entre 500nm et 600nm et même de 540 ou 550nm à 600nm, mieux dans une plage B de 550 à 600nm, de préférence avec une transmission lumineuse d'au moins 25% et mieux d'au moins 30% ou mieux encore 40%, 60% à la longueur d'onde de référence et mieux dans la plage B.

Contrairement au ZnS classique qui est opaque dans le spectre visible, le matériau de l'insert selon l'invention peut être aussi avantageusement transparent dans le visible ce qui permet :

- d'identifier les défauts dans le cristal de façon simple, limitant ainsi le taux de rebut
- de bien pré-viser le système optique (avec une caméra dite thermique sensible dans la longueur d'onde de référence)

La transmission lumineuse est mesurée pour la longueur d'onde de référence ou mieux pour la plage B avec un spectrophotomètre tel que le Perkin Elmer Lambda-35.

La transmission lumineuse peut être mesurée selon la norme ISO 9050 :2003 en utilisant l'illuminant D65, et être la transmission totale (notamment intégrée dans le domaine du visible et pondérée par la courbe de sensibilité de l'oeil humain), tenant compte à la fois de la transmission directe et de l'éventuelle transmission diffuse, la mesure étant faite par exemple à l'aide d'un spectrophotomètre muni d'une sphère intégrante, la mesure à une épaisseur donnée étant ensuite convertie le cas échéant à l'épaisseur de référence de 4mm selon la norme ISO 9050 :2003.

La transmission optique infrarouge est mesurée pour la plage LB par un spectrophotomètre à transformée de Fourier tel que le BrukerVertex-70 ou par un spectrophotomètre tel que le lamba 900 de Perkin Elmer.

De manière avantageuse, le matériau de l'insert présente :

- une transmission optique infrarouge (infrared optical transmission en anglais) d'au moins 30%, au moins 40% et mieux d'au moins 60%, 65% ou 70% dans la plage LB, notamment une variation de transmission optique infrarouge d'au plus 5% ou 3% ou 2% (spectre plat) dans la plage LB
- et même de préférence une transmission lumineuse d'au moins 25% et mieux d'au moins 30% ou encore 40%, 60% dans la plage B notamment une variation de transmission lumineuse d'au plus 5% ou 2% (spectre plat) dans la plage B.

L'insert est par exemple incolore ou teinté (en restant transparent) notamment jaune, orange.

Le matériau de l'insert peut être poli (face intérieure et/ou extérieure). Avantageusement, le matériau de l'insert selon l'invention peut être choisi parmi un matériau (de préférence polycristallin), en particulier obtenu par dépôt chimique en phase vapeur) suivant :

- un composé du zinc comprenant du sélénium et/ou du soufre ou
- un composé comprenant un fluorure de baryum
- voire même un composé comportant du bromure de thallium-iodure tel que celui de type KRS-5 (Thallium Bromide-Iodide).

Et en particulier le matériau de l'insert est choisi parmi :

- un composé comprenant un sulfure de zinc multispectral, en particulier obtenu après pressage isostatique à chaud (traitement par une presse isostatique sous la température de préférence d'au moins 800°C), notamment incluant du sélénium, tel que $ZnS_xSe_{1-x}$ avec x de préférence d'au moins 0,97 mieux d'au moins 0,99 et encore mieux d'au moins 0,998
- un composé comprenant un séléniure de zinc, en particulier le ZnSe,
- un composé comprenant un fluorure de baryum à 1 et de préférence d'au plus 0,25 mieux d'au plus 0,03 ou encore mieux d'au plus 0,005, en particulier le $BaF_2$.

Le sulfure de zinc avec un grade multispectral (MS) est un matériau récent. Il peut être polycristallin et obtenu en mettant en oeuvre (notamment après formation par dépôt chimique en phase vapeur CVD à partir de vapeur de zinc et du gaz $H_2S$) un pressage isostatique à chaud (HIP en anglais).

La transmission du sulfure de zinc multispectral peut être large spectre avec un spectre plat. La transmission est en particulier supérieure à 60% de $0,5\mu m$ à $10\mu m$.

L'indice de réfraction du ZnS multispectral est par exemple entre 2,1 et 2,3 dans la plage LB et dans le visible entre 2,3 et 2,6.

Le sulfure de zinc multispectral et de préférence polycristallin est avantageux en vue de sa combinaison de propriétés optiques, mécaniques et résistance chimique.

Le sulfure de zinc multispectral polycristallin le plus connu est le Cleartran[™].

On peut citer le produit ZnS multispectral vendu par la société II-VI ou Crystaltechno Ltd. On peut citer comme vendeurs de séléniure de zinc polycristallin, les sociétés Hellma, II-VI ou Crystaltechno Ltd.

Avantageusement pour améliorer la résistance mécanique, l'insert peut comporter une couche de protection mécanique et/ou chimique sur la face extérieure et éventuellement sur la face intérieure.

La couche de protection mécanique et/ou chimique (de préférence un revêtement - monocouche ou multicouche -) peut être choisie parmi au moins l'une des couches suivantes :

- une couche comprenant un sulfure de zinc (notamment ZnS) en particulier sur un insert de $ZnS_xSe_{1-x}$, notamment ZnSe, pour une protection mécanique,
- une couche diamant, de préférence amorphe pour ses propriétés d'adhésion au cristal de l'insert, notamment d'épaisseur d'au moins 10nm ou 20nm et de préférence de 50nm à 300nm et même d'au plus 100nm,
- une couche DLC (pour « diamond like carbon » en anglais), c'est à dire une couche à base de carbone de type diamant, de préférence amorphe, notamment d'épaisseur d'au moins 10nm ou 20nm et de préférence de 50nm à 300nm et même d'au plus 100nm.

L'ajout d'une couche suffisamment mince de ZnS sur ZnSe ne dégrade pas la transmission et garantit une résistance à l'érosion similaire au ZnS massif. Un exemple de produit est le TUFTRAN[™] de la société Rohm & Haas.

Par exemple le matériau tel que le $ZnS_xSe_{1-x}$ (dont ZnS) peut être revêtu par une couche de ZnS pour le protéger contre des acides et autres solvants spécifiques comme le méthanol etc.

Alternativement au ZnS, on peut donc déposer par exemple par dépôt en phase chimique (notamment PECVD) ou dépôt en phase vapeur (PVD) une couche diamant (ou une couche DLC) sans dégrader la transmission et en garantissant une résistance à l'érosion encore plus grande. Un exemple de fabrication est décrit dans la publication de Osipkov et autres IOP conf. Ser. Material Science and Engineering 74 (2015) 012013. L'insert peut être donc revêtu d'une surcouche fonctionnelle (anti rayures, antibuée etc.) d'indice de réfraction différent n est l'indice du matériau d'épaisseur dominante.

Sur la face interne du vitrage (F2 ou F4 si vitrage feuilleté) peut être collée une platine notamment d'épaisseur 1 à 3mm, et même 1,5 à 2,5mm. Elle est par exemple en plastique éventuellement renforcé (fibres etc) par exemple polycarbonate (PC), polyméthacrylate de méthyle (PMMA), polyéthylène (PE), polypropylène (PP), polyamide (PA66), acrylonitrile butadiène styrène (ABS), et leurs alliages ABS-PC, polystyréne (PS), acrylonitrile styrène acrylate ASA, à base de polymère de formaldéhyde (polyoxymethylene POM), de terphényle polybromé (PBT), de préférence chargé en fibres de verre pour encore plus de résistance, notamment le PA66 GF30 (30% de fibres de verre).

Cette platine peut servir pour fixer la caméra thermique et/ou un boitier. Elle peut être trouée au droit dudit trou traversant.

Elle peut aussi porter des éléments fonctionnels par exemple une caméra dans le visible et/ un LIDAR ou tout autre capteur (pluie, de luminosité etc.). Elle comporte autant de trous que nécessaire pour les ou le capteur (trou pour caméra visible, pour LIDAR etc).

Le vitrage selon l'invention peut être un vitrage feuilleté, notamment un pare-brise de véhicule (routier, automobile en particulier), en particulier bombé, comprenant une première feuille de verre avec ladite face principale externe appelée F1 et une face principale opposée (appelée F2) et une deuxième feuille de verre avec ladite face principale interne appelée F4 côté intérieur de l'habitacle (et la face principale opposée F3), les première et deuxième feuilles de verre étant liées par un intercalaire de feuilletage, notamment acoustique et/ou teinté, en une matière polymère notamment organique (notamment thermoplastique).

En particulier le vitrage feuilleté comporte :

- un première feuille de verre, éventuellement claire, extraclaire ou teintée notamment grise ou verte, de préférence bombée, formant vitrage extérieur, avec des première et deuxième faces principales respectivement dites face F1 et face F2, si véhicule automobile d'épaisseur de préférence d'au plus 2,5mm, même d'au plus 2mm - notamment 1,9mm, 1,8mm, 1,6mm et 1,4mm- ou même d'au plus 1,3mm ou d'au plus 1mm
- un intercalaire de feuilletage, éventuellement clair, extraclair ou teinté notamment gris ou vert, en matière polymérique de préférence thermoplastique et mieux encore en polyvinylbutyral (PVB), de préférence si véhicule automobile d'épaisseur d'au plus 1,8mm, mieux d'au plus 1,2mm et même d'au plus 0,9mm (et mieux d'au moins 0,3mm et même d'au moins 0,6mm), notamment en retrait du chant du premier vitrage d'au plus 2mm et en retrait du chant d'un deuxième vitrage d'au plus 2mm, l'intercalaire de feuilletage ayant éventuellement une section transversale diminuant en forme en coin du haut vers le bas du vitrage feuilleté (en particulier un pare-brise),
- un deuxième vitrage, en verre minéral, de préférence bombé et de préférence clair ou extraclair voire teinté, formant vitrage intérieur, avec des troisième et quatrième faces principales, si véhicule automobile d'épaisseur de préférence inférieure à celle du premier vitrage, même d'au plus 2mm - notamment 1,9mm, 1,8mm, 1,6mm et 1,4mm-ou même d'au plus 1,3mm ou d'au plus 1mm, l'épaisseur des premier et deuxième vitrages étant de préférence strictement inférieure à 4mm, même à 3,7mm.

Le verre intérieur et/ou extérieur peut être neutre (sans coloration), ou (légèrement) teinté notamment gris ou vert, telle verre TSA de la société Saint-Gobain Glass. Le verre intérieur et/ou extérieur peut avoir subi un traitement chimique ou thermique du type durcissement, recuit ou une trempe (pour une meilleure résistance mécanique notamment) ou être semi trempé.

Sans sortir du cadre de l'invention, l'intercalaire peut bien entendu comprendre plusieurs feuillets en matière thermoplastique de natures différentes, par exemple de duretés différentes pour assurer une fonction acoustique, comme par exemple décrit dans la publication US 6,132,882, notamment un ensemble de feuillets de PVB de duretés différentes. De même l'une des feuilles de verres peut être amincie par rapport aux épaisseurs classiquement utilisées.

L'intercalaire peut selon l'invention présenter une forme en coin, notamment en vue d'une application HUD (Head Up Display pour visualisation tête haute). Egalement l'un des feuillets de l'intercalaire peut être teinté dans la masse.

Comme intercalaire de feuilletage usuel, outre le PVB, on peut citer le polyuréthane PU utilisé souple, un thermoplastique sans plastifiant tel que le copolymère éthylène/acétate de vinyle (EVA), une résine ionomère. Ces plastiques ont par exemple une épaisseur entre 0,2 mm et 1,1mm, notamment 0,3 et 0,7mm.

L'intercalaire de feuilletage peut comprendre un autre film plastique fonctionnel (transparent, clair ou teinté) par exemple un film en poly(éthylène téréphtalate) PET porteur d'une couche athermique, électroconductrice etc. par exemple on a PVB/ film fonctionnel/PVB entre les faces F2 et F3.

Le film plastique transparent peut être d'une épaisseur comprise entre 10 et 100 $\mu$m. Le film plastique transparent peut être plus largement en polyamide, polyester, polyolefine (PE : polyéthylène, PP : polypropylène), polystyrène, polyvinyle chloride (PVC), poly téréphtalate d'éthylène (PET), polyméthacrylate de méthyle (PMMA), polycarbonate (PC). On préfère un film clair notamment le PET.

Comme on peut utiliser par exemple un film clair de PET revêtu, par exemple XIR de la société Eastman, un film coextrudé en PET-PMMA, par exemple du type SRF 3M®, mais aussi de nombreux autres films (par exemple en PC, PE, PEN, PMMA, PVC), qui sont visuellement aussi transparents que possible et ne se modifient pas dans l'autoclave en ce qui concerne leur surface et leur consistance.

Afin de limiter l'échauffement dans l'habitacle ou de limiter l'usage d'air conditionné, l'une des feuilles de verre au moins (de préférence le verre extérieur) est teintée, et le vitrage feuilleté peut comporter également une couche réfléchissant ou absorbant le rayonnement solaire, de préférence en face F4 ou en face F2 ou F3, en particulier une couche d'oxyde transparent électro-conducteur dite couche TCO (en face F4) ou même un empilement de couches minces comprenant au moins une couche TCO, ou d'empilements de couches minces comprenant au moins une couche d'argent (en F2 ou F3), la ou chaque couche d'argent étant disposée entre des couches diélectriques.

On peut cumuler couche (à l'argent) en face F2 et/ou F3 et couche TCO en face F4. La couche TCO (d'un oxyde transparent électro-conducteur) est de préférence une couche d'oxyde d'étain dopé au fluor ($SnO_2$:F) ou une couche d'oxyde mixte d'étain et d'indium (ITO).

Naturellement l'application la plus recherchée est que le vitrage soit un pare-brise d'un véhicule routier (automobile) ou même ferroviaire (à vitesse modérée).

Le vitrage selon l'invention peut comporter au moins une première feuille de verre comportant sur une face principale une couche opaque (de masquage) notamment un émail (noir etc.) en bordure du trou traversant (de façon à masquer la ou les caméras par exemple).

Le vitrage feuilleté selon l'invention peut comporter une première feuille de verre comportant sur une face principale (par exemple la face F2) une couche opaque (de masquage) notamment un émail (noir etc.) en bordure du trou traversant (de façon à masquer la ou les caméras par exemple) et/ou une deuxième feuille de verre comportant sur une face principale (par exemple la face F3 ou F4) une couche opaque (de masquage) notamment un émail (noir etc.) en bordure du trou traversant (de façon à masquer la ou les caméras par exemple).

On peut aussi prévoir une couche de masquage sur au moins l'une des faces principales de l'intercalaire de feuilletage notamment PVB.

L'invention concerne en outre un dispositif comportant :

- l'élément vitré tel que défini précédemment, le vitrage présentant notamment une inclinaison définie par un angle α par rapport à l'horizontale en position montée (dans le véhicule), en particulier un pare-brise
- une caméra dite thermique, disposée côté face interne, faisant face à l'insert, de façon à recevoir un rayonnement électromagnétique après traversée dudit insert, caméra thermique comprenant une pupille (d'entrée), notamment circulaire, un système de détection infrarouge dans la plage LB par exemple par microbolométrie, notamment sans refroidissement cryogénique (et un objectif), la caméra thermique étant définie par un angle de vue vertical θ d'au moins 10° ou 20° et en particulier d'au plus 60° ou 50° ou 40°.

On préfère une détection infrarouge avec une sensibilité maximum dans la plage LB et même une sensibilité faible au-delà de 15 ou 14 μm et en deçà de 7 ou 6 μm.

Comme exemple de caméra thermique on peut citer le produit Atom®1024 de la société Lynred USA.

La caméra thermique peut en outre être définie par un axe optique X passant par le centre C de la pupille, la caméra thermique forme un angle d'inclinaison positif T avec un axe horizontal X0, en amont de la face interne, la caméra étant inclinée vers le haut (en position montée).

Comme l'insert à faces non parallèles rabat tous les rayons vers le bas, l'axe optique de la caméra thermique est également dévié vers le bas (après traversée de l'insert). Autrement dit, si la caméra thermique avant l'insert regarde à l'horizon (si l'axe optique est horizontal) la caméra thermique va regarder vers le bas après l'insert ce qui n'est pas la solution optimale en terme d'angle de vue total car notamment on risque de pointer la caméra thermique en direction du capot du véhicule. Il est donc en particulier intéressant de compenser ceci en orientant la caméra thermique vers le haut de façon à ce qu'après l'insert l'axe optique X soit à nouveau horizontal ou tout proche.

Le rayon extrême inférieur issu du centre C de la pupille arrivant avec une incidence plus importante que le rayon extrême supérieur issu du centre C de la pupille, le rayon extrême inférieur est bien toujours plus dévié vers le bas que le rayon extrême supérieur ce qui donne l'effet global d'augmentation de l'angle de vue vertical de la caméra thermique.

Avantageusement, en définissant un rayon (central) R incident à la face extérieure dans une direction horizontale, le rayon R étant alors réfracté lors de sa traversée de l'insert, $D_0$ étant l'angle de déviation par l'insert du rayon R et défini par :

[Math 1]

$$D_O = \frac{\pi}{2} - \alpha + \sin^{-1}\left(n\sin\left(A - \sin^{-1}\left(\frac{\sin\left(\frac{\pi}{2} - \alpha\right)}{n}\right)\right)\right) - A$$

T est choisi tel que T vaut $D_0 \pm 10°$ en restant positif (donc une valeur positive entre $D_0$-10° et $D_0$+10°), et de préférence $D_0 \pm 5°$ ou $D_0 \pm 1°$.

$D_0$ est donc défini à partir d'un rayon central passant par le centre C de la pupille (faisant un angle $i_0$ en un point O de la face intérieure) sortant en un point O' de la face extérieure, formant alors ledit angle $D_0$ avec l'axe X.

Avantageusement on peut aussi prévoir que T forme un angle d'au plus 30° mieux d'au plus 20° avec l'horizontale X0.

Le choix de l'angle au sommet A peut-être dicté par la considération suivante : si A est trop important alors les rayons extrêmes inférieurs (issu du centre C de la pupille) ne sortent pas de l'insert et sont piégés par réflexion interne totale (confinés dans l'insert) ce qui va limiter l'augmentation possible du champ de vue. Il y a donc un angle $A_{max}$ optimal au-delà duquel il n'y a plus d'amélioration.

Alors de préférence, on détermine une plage de valeurs de $A_i$ (jusqu' à $A_{max}$) qui satisfont à l'équation suivante :

[Math 2]

$$A_i \leq \frac{\sin(\frac{\pi}{2} + \frac{\theta}{2} - T' - \alpha - A_i)}{n} + \sin^{-1}\left(\frac{1}{n}\right)$$

cette plage $A_i$ étant déterminée par itération
on fixe A étant dans une gamme allant d'une valeur non nulle à $A_i \pm 2°$.

T' étant un angle de la caméra thermique avec l'horizontale et est nul (la caméra thermique est horizontale) ou est de préférence égal à T (inclinée vers le haut).

Il s'agit d'une équation récursive qui définit un calcul qui termine (avec une solution au moins, ici avec une gamme de solutions).

Une machine peut exécuter les calculs par exemple par une méthode d'optimisation telle que l'algorithme de descente de gradient.

L'exécution du calcul va engendrer des appels récursifs en cascade en étant assurés que cette cascade d'appels prend fin.

Autrement dit, en définissant le rayon extrême inférieur issu du centre C de la pupille formant un angle $i_B$ avec la face intérieure.

[Math 3]

$$i_B = \frac{\pi}{2} + \frac{\theta}{2} - T - \alpha - A$$

Et

[Math 4]

$$A \leq \frac{\sin i_B}{n} + \sin^{-1}\left(\frac{1}{n}\right)$$

Pour optimiser encore, on détermine un angle $A_m$ optimal qui satisfait à l'équation suivante

[Math 5]

$$A_m = \frac{\sin\left(\frac{\theta}{2} - \sin^{-1}\left(n\sin\left(A_m - \sin^{-1}\left(\frac{\sin\left(\frac{\pi}{2} - \alpha\right)}{n}\right)\right)\right)\right)}{n} + \sin^{-1}\left(\frac{1}{n}\right)$$

$A_m$ étant déterminé par itération
et on fixe A= $A_m \pm 2°$ et A non nul

Avantageusement :

- on peut aussi prévoir que la caméra thermique est agencée en face de l'insert de sorte qu'en définissant un rayon incident tangentiel à la face extérieure, réfracté dans l'insert, et en sortie de la face intérieure de l'insert formant un angle $\theta_1$ avec l'axe optique X, $\theta_1$ est supérieur ou égal à 0,70/2, de préférence supérieur ou égal 0,80/2 ou 0,90/2, rayon incident tangentiel dans le plan vertical qui contient X et arrivant d'une zone inférieure, sous l'insert
- le dispositif présente un champ de vue vertical dit effectif, défini après réfraction par l'insert, qui est d'au moins 20% et même d'au moins 40% ou 60% de plus qu'avec un insert à faces intérieure et extérieure parallèles -avec A nul (toutes choses égales par ailleurs)-.

La face extérieure peut être inscrite dans un rectangle ou carré définissant un centre M' qui est l'intersection des diagonales dudit rectangle ou carré, en définissant un rayon R' incident à la face extérieure dans une direction horizontale passant par ledit centre M' réfracté lors de sa traversée de l'insert, le rayon R' est collecté par la pupille et de préférence est distant du centre C d'au plus 5mm ou d'au plus 2mm.

La caméra thermique peut être de volume donné défini par un point de contact CT (un coin supérieur sur le plan frontal de l'objectif ou en avant ou en arrière de l'objectif) apte à toucher en premier le vitrage, ou une platine sur la face interne du vitrage, ou l'insert, ou une pièce dans l'environnement périphérique dudit vitrage, en position monté dans un véhicule.

Lorsque la caméra thermique pivote vers le haut (suivant l'angle T), le point de contact CT intervient à une distance de C avec l'insert qui est plus faible que si la caméra thermique est horizontale.

Autrement dit, en orientant vers le haut la caméra thermique il peut être possible de l'approcher plus près de l'insert si nécessaire.

Aussi de préférence, la caméra thermique est placée plus près que la distance minimale d'approche correspondant à celle de la caméra thermique à l'horizontale Et de préférence :

- le centre C est à moins de 30mm de la face intérieure
- et le point O (référent « optique ») sur la face interne passant par l'axe optique X est distant du plan local de la face interne du vitrage d'au plus de 5 ou 3mm ou 1mm par exemple
- et/ou et le point M (référent « mécanique » indépendant de la caméra thermique) sur la face interne est distant du plan local de la face intérieure du vitrage d'au plus de 5mm ou 3mm ou 1mm.

L'invention concerne en outre un véhicule routier (automobile) ou ferroviaire, notamment autonome ou semi-autonome, intégrant ledit élément vitré (en particulier pare-brise) et même ledit dispositif tel que défini précédemment.

L'invention concerne en particulier un véhicule automobile, notamment autonome ou semi-autonome, intégrant ledit élément vitré (en particulier pare-brise) et même ledit dispositif tel que défini précédemment.

Certains modes de réalisations avantageux mais non limitatif de la présente invention sont décrits ci-après, qui peuvent bien entendu combinés entres eux le cas échéant.

La figure 1 représente schématiquement un véhicule avec un dispositif 100 comportant un pare-brise avec un insert à faces non parallèles laissant passer les infrarouges et une caméra thermique dans l'habitacle, dans un premier mode de réalisation, c'est une vue partielle de coupe dans un plan passant par le centre C de la pupille de la caméra thermique.

La figure 2 représente schématiquement une vue partielle de coupe d'un dispositif 200 comportant un pare-brise avec un insert à faces non parallèles, dans un deuxième mode de réalisation.

La figure 3 représente schématiquement une vue partielle de coupe d'un dispositif 300 comportant un pare-brise avec un insert à faces non parallèles, dans un troisième mode de réalisation.

La figure 4 représente schématiquement une vue partielle en coupe d'un dispositif 400 comportant un pare-brise avec un insert à faces non parallèles, dans un quatrième mode de réalisation, c'est une vue partielle de coupe dans un plan passant par le centre C de la pupille de la caméra thermique.

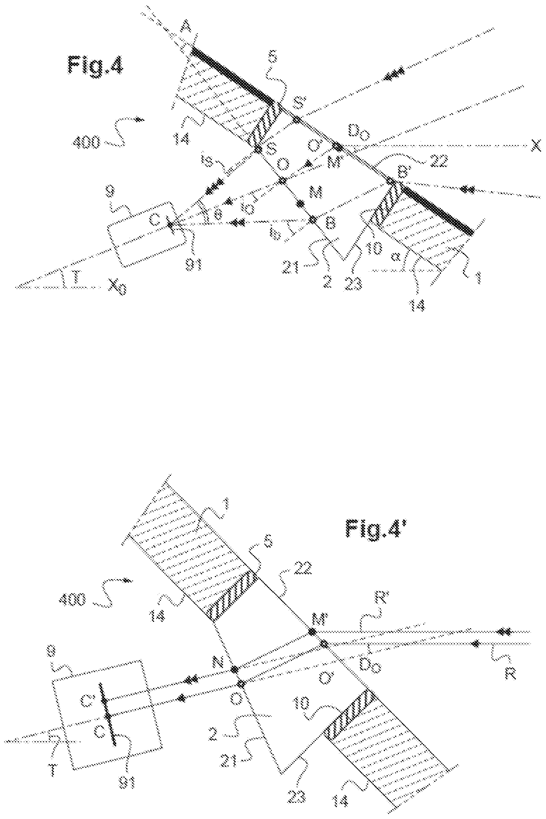

La figure 4' est une vue de détail de la figure 4 illustrant des rayons particuliers R et R'.

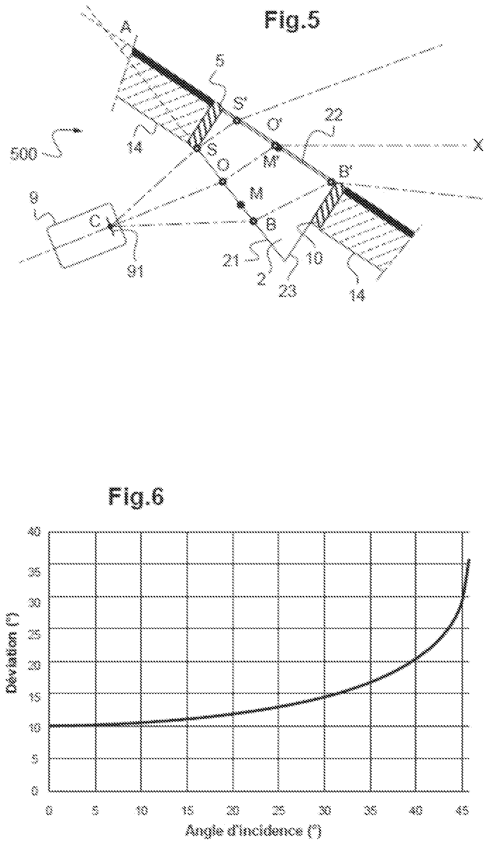

La figure 5 représente schématiquement une vue partielle en coupe d'un dispositif 500 comportant un pare-brise avec un insert à faces non parallèles, dans un cinquième mode de réalisation.

La figure 6 représente la déviation des rayons en aval de l'insert en fonction de l'angle d'incidence sur la face intérieure.

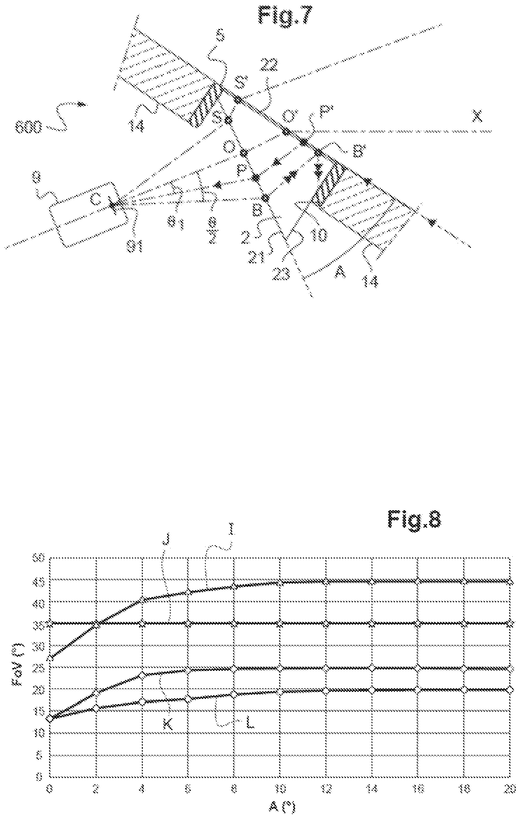

La figure 7 représente schématiquement une vue partielle en coupe d'un dispositif 600 comportant un pare-brise avec un insert à faces non parallèles, dans un sixième mode de réalisation.

La figure 8 représente le champ de vue effectif en fonction de l'angle A de l'insert et plus précisément

- la courbe I représente le champ de vue vertical total en fonction de l'angle A de l'insert
- la courbe J représente le champ de vue horizontal en fonction de l'angle A de l'insert
- la courbe K représente le champ de vue vertical inférieur en fonction de l'angle A de l'insert
- la courbe L représente le champ de vue vertical supérieur en fonction de l'angle A de l'insert.

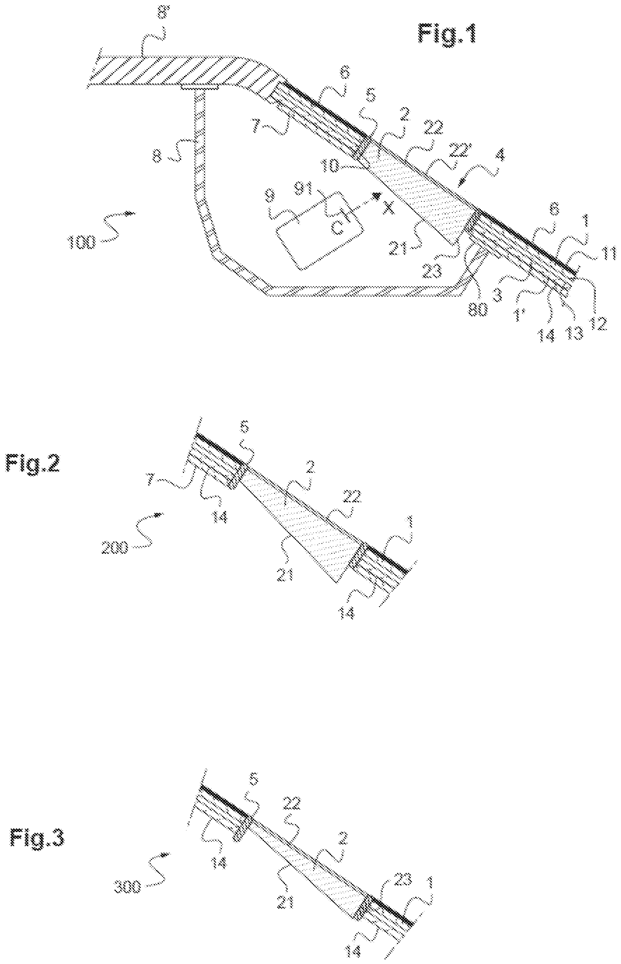

La figure 1 schématise un pare-brise 100 monté dans un véhicule routier voire ferroviaire selon l'invention, en coupe avec une caméra thermique 9 placée derrière le pare-brise face à une zone qui se situe de préférence dans la partie centrale et supérieure du pare-brise. Dans cette zone, la caméra thermique 9 peut être orientée avec un certain angle vis-à-vis de l'horizontale. Dans cet exemple la caméra thermique est préférentiellement orientée vers le haut.
Le pare-brise 100 est un vitrage feuilleté classique comprenant :

- une feuille de verre externe 1 de préférence teintée, par exemple en verre TSA et de 2,1mm d'épaisseur, avec face extérieure F1 et face intérieure F2
- et une feuille de verre interne 1' (ou en variante une feuille de plastique) par exemple en verre TSA (ou clair ou extraclair) et de 2,1mm d'épaisseur ou même de 1,6mm ou même moins, avec face extérieure F3 et face intérieure F4 côté habitacle
- les deux feuilles de verre étant liées l'une à l'autre par un intercalaire en matière thermoplastique 3, le plus souvent en polyvinylbutyral (PVB) de préférence clair, d'épaisseur submillimétrique éventuellement présentant une section transversale diminuant en forme en coin du haut vers le bas du vitrage feuilleté, par exemple un PVB (RC41 de Solutia ou d'Eastman) d'épaisseur 0,76mm environ ou en variante si nécessaire un PVB acoustique (tricouche ou quadricouche) par exemple d'épaisseur 0,81mm environ, par exemple intercalaire en trois feuillets PVB.

De façon classique et bien connue, le pare-brise est obtenu par feuilletage à chaud des éléments 1, 1' et 3.
Le pare-brise 100 comporte sur la face extérieure 11 par exemple (ou de préférence en F2 12 et/ou en face F3 13 ou F4 14) de préférence un revêtement opaque par exemple noir 6, tel qu'une couche d'émail ou de laque noire, sur toute la surface du vitrage disposée en regard du dispositif incorporant la caméra thermique (sur tout le pourtour du trou donc), y compris son boîtier 8 (plastique, métal etc.), de manière à cacher celui-ci. Le boitier 8 peut être fixé à une platine 7 collée à la face F4 par une colle 80 et au toit 9. La platine 7 est optionnelle et le boitier 8 peut être fixé différemment.
La couche opaque 6 peut s'étendre au-delà de la zone avec l'insert défini plus bas. Eventuellement l'extension (latérale) de la couche opaque formant une bande en bordure supérieure du trou traversant pour que le pare-brise ait une bande opaque (noire) le long du bord longitudinal supérieur voire même un cadre opaque (noir) sur toute la périphérie.
Selon l'invention, dans la zone périphérique en vis-à-vis de la caméra thermique, le pare-brise comporte un trou traversant 4 entre la face interne 11 et la face externe 14, trou délimité par une paroi latérale 10 du vitrage feuilleté (verre 1/PVB 3/verre 1'), ledit trou traversant comportant :

- un insert 2 en matériau transparent dans une plage dite LB de longueurs d'onde dans les infrarouges qui va au moins de 9,5 à 10,5$\mu$m et de préférence de 8 à 12$\mu$m, d'indice de réfraction n dans la plage LB, notamment de 1,35 à 4,5
- entre l'insert et la paroi latérale, des moyens de fixation de l'insert notamment sous forme d'un anneau 5 en matière souple, polymère, les moyens de fixations (anneau) étant notamment collés à la paroi latérale.

L'insert 2 comporte une face intérieure 21 et une face extérieure 22 non parallèles, de préférence planes, formant un angle au sommet A non nul et une tranche 23, l'insert ayant une épaisseur e variable diminuant en direction du bord supérieur du vitrage en position montée (sur le véhicule), -avec e1 l'épaisseur minimale, en bordure supérieure et e2 maximale en bordure inférieure-, l'épaisseur e étant de préférence d'au plus 1cm ou subcentimétrique en particulier dans une gamme allant de 3 à 10mm.

La face extérieure ici affleure de la face externe (donc localement la face extérieure et la face externe sont coplanaires) ou en variante est en retrait de la face externe.

L'insert est de préférence de forme circulaire ou quasi-circulaire. La face extérieure (et la face intérieure) est de préférence circulaire ou quasi-circulaire.

La tranche ou face latérale 23 de l'insert en regard de la paroi latérale du vitrage présente de préférence une épaisseur suffisante pour faciliter le maintien, par exemple d'au moins 3mm (vers le haut du vitrage).

La face intérieure 21 forme un angle A0 non nul avec (le plan local de) la face interne 14, A0 vaut ici A, la face extérieure est coplanaire avec la face externe. Autrement dit la diminution d'épaisseur vers le haut est obtenue par la forme en biseau de la face intérieure qui peut tout ou partie être en saillie de la face interne.

La face latérale 23 coté bas est en saillie vers l'habitacle.

La face extérieure circulaire est inscrite dans un rectangle ou carré de largeur Wi et hauteur Di avec rapport de forme Di/Wi d'au moins 0,8 ou 0,9 et d'au plus 1,1 ou 1,2 de préférence Di égal à Wi, avec Di d'au plus 35mm ou 25mm, notamment d'au moins 5mm ou 8mm, définissant un centre M' qui est l'intersection des diagonales dudit rectangle. La face intérieure circulaire est inscrite dans un rectangle ou carré, définissant un centre M qui est l'intersection des diagonales dudit rectangle.

La face intérieure 21 de l'insert peut, au point le plus haut, émerger de la face interne (ou être affleurant), et au point le plus bas affleurer de la face interne du vitrage (ou être en retrait notamment d'au plus 5mm).

La section transversale (passant par un plan perpendiculaire aux faces intérieure et extérieure en passant par M et M') est par exemple un quadrilatère.

Le matériau de l'insert 2 est également de préférence transparent dans le visible à une longueur d'onde de référence comprise entre 500nm et 600nm.

Il peut être transparent dans le visible encore plus préférentiellement au moins dans une plage B allant de 550 à 600nm.

Le matériau de l'insert 2 présente une transmission infrarouge d'au moins 40% ou 50% et mieux d'au moins 65% dans ladite plage LB et une transmission lumineuse d'au moins 30% et mieux d'au moins 40% à la longueur d'onde de référence et mieux dans la plage B.

Le matériau de l'insert 2 notamment polycristallin est par exemple choisi parmi :

- un composé du zinc comprenant du sélénium et/ou du soufre ou
- un composé comprenant un fluorure de baryum.

En particulier on choisit :

- un composé comprenant un sulfure de zinc multispectral, en particulier obtenu après pressage isostatique à chaud, notamment incluant du sélénium, tel que $ZnS_xSe_{1-x}$ avec x de préférence d'au moins 0,97, en particulier le ZnS multispectral
- ou un composé comprenant un séléniure de zinc, en particulier le ZnSe, notamment incluant du soufre, tel que $ZnSe_yS_{1-y}$ avec y d'au moins 0,97
- un composé comprenant un fluorure de baryum notamment incluant du calcium et/ou du strontium, notamment $Ba_{1-i-j}Ca_jSr_iF_2$ avec i etj de préférence d'au plus 0,25 ou encore $Ba_{1-i}Ca_iF_2$ avec i de préférence d'au plus 0,25, en particulier le $BaF_2$.

A titre préféré on peut choisir un ZnS multispectral nu ou recouvert d'une couche de protection de sulfure de zinc ou un ZnSe recouvert d'une couche de protection de sulfure de zinc.

L'insert 2 comporte ici de préférence une couche de protection mécanique et/ou chimique 22' sur la face extérieure et éventuellement sur la face intérieure. C'est un revêtement choisi parmi une couche comprenant un sulfure de zinc, une couche diamant ou une couche DLC.

Le trou traversant 4 peut être alternativement une encoche donc un trou traversant débouchant de préférence vers le haut.

Le trou traversant (et l'insert) peut être dans une autre région du pare-brise ou même dans un autre vitrage du véhicule.

Le vitrage du véhicule peut être monolithique en alternative.

La caméra thermique 9 comprend une pupille intérieure 91 circulaire, un système de détection infrarouge dans la plage LB et un objectif, la caméra thermique étant définie par :

- un angle de vue vertical θ d'au moins 10° ou 20° et en particulier d'au plus 60° ou 50° ou 40°
- un axe optique X passant par le centre C de la pupille, formant un angle d'inclinaison T avec l'horizontale X0, la caméra thermique étant inclinée vers le haut (en position montée).

On définit en outre une droite de centrage définie comme étant la projection dans le plan de la face interne du vitrage de la droite verticale passant par le centre M, (cette droite va du bord haut au bord bas divisant ainsi en 2 zones la face intérieure), la caméra est positionnée de sorte que (ou « est centrée » au sens où) l'axe optique X impacte la face intérieure à moins de 5mm ou 2mm de la droite de centrage.

On préfère une détection infrarouge avec une sensibilité maximum dans la plage LB et même une sensibilité faible au-delà de 15 ou 14 $\mu$m et en deçà de 7 ou 6 $\mu$m.

Comme exemple de caméra thermique on peut citer le produit Atom®1024 de la société Lynred USA.

On peut prévoir d'autres intégrations de l'insert au pare-brise suivant l'épaisseur de l'insert et celle du pare-brise.

La figure 2 représente schématiquement une vue partielle de coupe d'un dispositif 200 comportant un pare-brise avec un insert à faces non parallèles, dans un deuxième mode de réalisation.

L'insert 2 diffère du précèdent en ce que son épaisseur coté haut du pare-brise est inférieure à celle du pare-brise. La face latérale 23 coté haut couvre partiellement la paroi latérale du vitrage enserrant le trou coté haut.

La figure 3 représente schématiquement une vue partielle de coupe d'un dispositif 300 comportant un pare-brise avec un insert à faces non parallèles, dans un troisième mode de réalisation.

L'insert 2 diffère du premier en ce que (comme le précédent) son épaisseur coté haut du pare-brise est inférieure à celle du pare-brise. La face latérale coté haut 23 couvre partiellement la paroi latérale du vitrage enserrant le trou coté haut et en ce que la face intérieure 21 coté bas affleure de la face interne au lieu d'être en saillie vers l'habitacle. Par ailleurs la platine 7 est supprimée.

La figure 4 représente schématiquement une vue partielle en coupe d'un dispositif 400 comportant un pare-brise avec un insert à faces non parallèles, dans un quatrième mode de réalisation, c'est une vue partielle de coupe dans un plan passant par le centre C de la pupille de la caméra thermique.

La caméra dite thermique 9 comprend une pupille (d'entrée) 91 circulaire, un système de détection infrarouge dans la plage LB et un objectif, la caméra thermique étant définie par :

- un angle de vue vertical θ d'au moins 10° ou 20° et en particulier d'au plus 60° ou 50° ou 40°
- un axe optique X passant par le centre C de la pupille, de préférence formant un angle d'inclinaison T avec l'horizontale X0 coté habitacle, la caméra thermique étant inclinée vers le haut (en position montée).

La caméra thermique 9 pointe vers le haut de façon à ce qu'en aval de l'insert (côté face extérieure), l'axe optique X impacté par l'insert (autrement définissable comme l'axe optique de l'ensemble caméra thermique et insert) soit à nouveau horizontal ou tout proche.

Le rayon extrême inférieur (représenté par deux flèches) issu du centre C de la pupille arrivant sur la face intérieure 21 avec une incidence is plus importante que l'incidence is du rayon extrême supérieur (représenté par trois flèches) issu du centre C de la pupille, le rayon extrême inférieur est bien toujours plus dévié vers le bas en sortie de l'insert que le rayon extrême supérieur ce qui donne l'effet global d'augmentation de l'angle de vue vertical de la caméra thermique.

Avantageusement, en définissant un rayon (central) R incident à la face extérieure dans une direction horizontale, formant un angle $D_0$ avec l'axe optique X, R étant alors réfracté lors de sa traversée de l'insert, $D_0$ étant l'angle de déviation par l'insert du rayon R et défini par :

[Math 6]

$$D_O = \frac{\pi}{2} - \alpha + \sin^{-1}\left(n\sin\left(A - \sin^{-1}\left(\frac{\sin\left(\frac{\pi}{2} - \alpha\right)}{n}\right)\right)\right) - A$$

T est choisi tel que T vaut $D_0 \pm 10°$ en restant positif ou $D_0 \pm 5°$ ou encore $D_0 \pm 1°$.

On peut prévoir que T forme un angle d'au plus 30° mieux d'au plus 20° avec l'horizontale.

Le choix de l'angle au sommet A peut-être dicté par la considération suivante : si A est trop important alors les rayons extrêmes inférieurs (issu du centre C de la pupille) ne sortent pas de l'insert et sont piégés par réflexion interne totale (confinés dans l'insert)) ce qui va limiter l'augmentation possible du champ de vue. Il y a donc un angle A$_m$ optimal au-delà duquel il n'y a plus d'amélioration.

En définissant le rayon extrême inférieur issu du centre C de la pupille formant un angle i$_B$ avec la face intérieure

[Math 7]

$$i_B = \frac{\pi}{2} + \frac{\theta}{2} - T - \alpha - A$$

Et

[Math 8]

$$A \leq \frac{\sin i_B}{n} + \sin^{-1}\left(\frac{1}{n}\right)$$

Pour optimiser encore, on détermine un angle A$_m$ optimal qui satisfait à l'équation suivante

[Math 9]

$$A_m = \frac{\sin\left(\frac{\theta}{2} - \sin^{-1}\left(n\sin\left(A_m - \sin^{-1}\left(\frac{\sin\left(\frac{\pi}{2} - \alpha\right)}{n}\right)\right)\right)\right)}{n} + \sin^{-1}\left(\frac{1}{n}\right)$$

A$_m$ étant déterminé par itération
et on fixe A égal à A$_m$.

La figure 4' est une vue de détail de la figure 4 illustrant des rayons particuliers R et R'. En définissant le rayon R' incident à la face extérieure 22 dans une direction horizontale passant par ledit centre M' réfracté lors de sa traversée de l'insert, le rayon R' est collecté par la pupille en C' et de préférence est distant du centre C d'au plus 5mm ou même d'au plus 2mm.

En définissant le rayon R incident à la face extérieure 22 dans une direction horizontale passant par O' réfracté lors de sa traversée de l'insert, le rayon R sortant en O est collecté par la pupille au centre C. R' est dévié d'un angle Do par l'insert.

La figure 5 représente schématiquement une vue partielle en coupe d'un dispositif 500 comportant un pare-brise avec un insert à faces non parallèles, dans un cinquième mode de réalisation, c'est une vue partielle de coupe dans un plan passant par le centre C de la pupille de la caméra thermique.

Si on choisit les paramètres suivants : θ champ de vue (FOV) de la caméra thermique égal à 24°, angle d'inclinaison α égal à 33°, indice de réfraction n égal à 2,2 dans la plage LB, (diamètre de l'insert égal à 10mm), angle de l'insert A égal à 8°, inclinaison T égale à Do c'est à dire 15,8°.

On a :

[Math 10]

$$i_S = \frac{\pi}{2} - \frac{\theta}{2} - T - \alpha - A$$

et

[Math 11]

$$i_B = \frac{\pi}{2} + \frac{\theta}{2} - T - \alpha - A$$

La déviation du rayon extrême supérieur vaut 12° celle du rayon extrême inférieur vaut 30°.

Ainsi le θ (FOV vertical) de la caméra thermique passe de 24° à une valeur effective (après traversée dans l'insert de 42° (égal à 24-12+30) soit un gain de +75%.

Plus généralement, le graphe de la figure 6 est une courbe qui montre la déviation des rayons en fonction de l'angle d'incidence sur la face intérieure de l'insert (pour n=2,2 et A=8°).

La courbe est bien croissante et le rayon extrême inférieur arrivant avec une incidence plus importante que le rayon extrême supérieur il est bien toujours plus dévié vers le bas que le rayon supérieur ce qui donne l'effet global d'augmentation de l'angle de vue vertical de la caméra thermique.

Il y a cependant une valeur limite à l'angle A au-delà de laquelle le rayon inférieur extrême ne ressort plus de l'insert mais est en réflexion interne totale sur la face externe, il est donc perdu.

En effet l'angle d'incidence is du rayon extrême inférieur sur la face interne doit satisfaire la condition :

[Math 12]

$$\sin^{-1}\left[n\left(A - \sin^{-1}\left(\frac{1}{n}\right)\right)\right] \leq i_B$$

Soit la condition sur A :

[Math 13]

$$A \leq \frac{\sin i_B}{n} + \sin^{-1}\left(\frac{1}{n}\right)$$

Or:

[Math 14]

$$i_B = \frac{\pi}{2} + \frac{\theta}{2} - T - \alpha - A$$

Ceci est illustré en figure 7 qui représente schématiquement une vue partielle en coupe d'un dispositif 600 comportant un pare-brise avec un insert à faces non parallèles, dans un sixième mode de réalisation, c'est une vue partielle de coupe dans un plan passant par le centre C de la pupille de la caméra thermique.

Si on choisit les paramètres suivants :champ de vue (FOV) θ égal à 24°, angle α égal à 33°, indice de réfraction n égal à 2,2, (diamètre de l'insert D égal à 10mm), angle de l'insert A égal à 20° (A trop grand pour être optimal), T est égal à Do et vaut 31,7°.

Le rayon inférieur extrême est en réflexion totale interne dans l'insert 2 et ne peut pas sortir.

On peut prévoir que la caméra thermique est agencée en face de l'insert de sorte qu'en définissant un rayon incident tangentiel à la face extérieure, réfracté dans l'insert, et en sortie de la face intérieure de l'insert formant un angle $\theta_1$ avec l'axe optique X, $\theta_1$ est supérieur ou égal à 0,70/2, de préférence supérieur ou égal 0,80/2 ou 0,90/2, rayon incident tangentiel dans le plan vertical qui contient X et arrivant d'une zone inférieure, sous l'insert.

La figure 8 représente le champ de vue effectif en fonction de l'angle A de l'insert (pour n=2,5 et θ = 27°).

Et plus précisément :

- la courbe I représente le champ de vue vertical total en fonction de l'angle A de l'insert
- la courbe J représente le champ de vue horizontal en fonction de l'angle A de l'insert qui reste constant
- la courbe K représente le champ de vue vertical inférieur en fonction de l'angle A de l'insert
- la courbe L représente le champ de vue vertical supérieur en fonction de l'angle A de l'insert.

On voit que le champ de vue vertical commence par augmenter puis sature vers A égal 10° à cause de cet effet de réflexion totale interne.

Dans un septième mode de réalisation, on abaisse n, l'angle du prisme optimal est alors plus important.

Si on choisit les paramètres suivants θ champ de vue (FOV) de la caméra égal à 24°, angle α égal à 33°, indice de réfraction n égal à 1,5, D égal à 10mm, angle de l'insert A égal à 20°, inclinaison T est égale à Do 15,8°.

Le θ (FOV vertical) de la caméra thermique passe de 24° à une valeur effective (après traversée dans l'insert) de 42° soit un gain de +74% environ.

**Revendications**

1. Elément vitré (100 à 600) comprenant :

   - un vitrage de véhicule, notamment automobile ou ferroviaire, en particulier pare-brise, lunette arrière, vitrage latéral, d'épaisseur E1 donnée, vitrage ayant une face principale externe (11) destinée à être orientée vers l'extérieur et une face principale interne (14) destinée à être côté habitacle, vitrage comportant, de préférence dans une zone périphérique de préférence qui est en partie supérieure du vitrage, un trou traversant entre la face interne et la face externe, trou délimité par une paroi latérale du vitrage,
   - dans ledit trou traversant, un insert (2) en matériau transparent dans une plage LB de longueurs d'onde dans le spectre infrarouge au-delà de 2,5µm, allant au moins de 9,5 à 10,5µm et de préférence de 8 à 12µm, en matériau d'indice de réfraction n dans la plage LB, avec une face intérieure (21) et une face extérieure (22), l'insert, étant de préférence de forme circulaire ou quasi-circulaire,

   **caractérisé en ce que** les faces intérieure (21) et extérieure (22) forment un angle au sommet A non nul, l'insert (2) ayant une épaisseur e variable et diminuant en direction du bord supérieur du vitrage.

2. Elément vitré selon la revendication précédente **caractérisé en ce que** l'épaisseur e variable est dans une gamme allant de 3 à 10mm.

3. Elément vitré selon l'une des revendications précédentes **caractérisé en ce que** la face intérieure (21) forme un angle A0 non nul avec la face interne (14), en particulier A0 vaut A±2° et/ou la face extérieure (22) est parallèle ou coplanaire avec la face externe (11) ou forme un angle d'au plus 2° avec la face externe (11).

4. Elément vitré selon l'une des revendications précédentes **caractérisé en ce que** A est d'au moins 2° et d'au plus 30°.

5. Elément vitré selon l'une des revendications précédentes **caractérisé en ce que** le matériau de l'insert (2) présente une transmission optique infrarouge d'au moins 30% et mieux d'au moins 40% et même mieux d'au moins 60%, 65% ou 70% dans la plage LB et de préférence une transmission lumineuse d'au moins 25% à une longueur d'onde de référence comprise entre 500nm et 600nm et même dans une plage B de 550nm à 600nm.

6. Dispositif comportant :

   - l'élément vitré (100 à 600) selon l'une des revendications précédentes, le vitrage, notamment pare-brise, présentant notamment une inclinaison définie par un angle $\alpha$ par rapport à l'horizontale en position montée
   - une caméra dite thermique (9), disposée côté face interne (14), faisant face à l'insert, de façon à recevoir un rayonnement électromagnétique après traversée dudit insert, caméra thermique comprenant une pupille (91), notamment circulaire, et un système de détection infrarouge dans la plage LB, la caméra thermique étant définie par un angle de vue vertical $\theta$ d'au moins 10° et en particulier d'au plus 60° ou 50°.

7. Dispositif selon la revendication précédente **caractérisé en ce que** la caméra thermique étant définie en outre par un axe optique X passant par le centre C de la pupille, la caméra thermique forme un angle d'inclinaison positif T avec un axe horizontal X0, en amont de la face interne, la caméra thermique étant inclinée vers le haut.

8. Dispositif selon la revendication précédente **caractérisé en ce qu'**en définissant un rayon R incident à la face extérieure (22) dans une direction horizontale, R étant alors réfracté lors de sa traversée de l'insert, $D_0$ étant l'angle de déviation par l'insert (2) du rayon R et défini par :

   [Math 15]

   $$D_O = \frac{\pi}{2} - \alpha + \sin^{-1}\left( n \sin\left( A - \sin^{-1}\left( \frac{\sin\left(\frac{\pi}{2} - \alpha\right)}{n} \right) \right) \right) - A$$

   T est choisi tel que T vaut $D_0 \pm$ 10° en restant positif.

9. Dispositif selon l'une des revendications 7 ou 8 **caractérisé en ce que** T forme un angle d'au plus 30° mieux d'au plus 20° avec l'horizontale X0.

10. Dispositif selon l'une des revendications précédentes de dispositif **caractérisé en ce que** la caméra thermique (9) est agencée en face de l'insert de sorte qu'en définissant un rayon incident tangentiel à la face extérieure (22), réfracté dans l'insert, et en sortie de la face intérieure (21) de l'insert formant un angle $\theta_1$ avec l'axe optique X, $\theta_1$ est supérieur ou égal à $0,7\theta/2$, de préférence supérieur ou égal $0,9\theta/2$, rayon incident tangentiel dans le plan vertical qui contient X et arrivant d'une zone inférieure, sous l'insert.

11. Dispositif selon l'une des revendications précédentes de dispositif **caractérisé en ce que** la face extérieure (22) est inscrite dans un rectangle définissant un centre M' qui est l'intersection des diagonales dudit rectangle, en définissant un rayon R' incident à la face extérieure (22) dans une direction horizontale passant par ledit centre M' réfracté lors de sa traversée de l'insert, le rayon R' est collecté par la pupille et de préférence est distant du centre C d'au plus 5mm ou même d'au plus 2mm.

12. Dispositif selon l'une des revendications précédentes de dispositif **caractérisé en ce que** la caméra thermique est inclinée vers le haut notamment suivant T et la caméra est placée plus près que la distance minimale d'approche correspondant à celle de la caméra à l'horizontale.

13. Dispositif selon l'une des revendications 7 à 12 **caractérisé en ce qu'**on détermine une plage de valeurs de $A_i$ qui satisfont à l'équation suivante :

[Math 16]

$$A_i \leq \frac{\sin(\frac{\pi}{2} + \frac{\theta}{2} - T' - \alpha - A_i)}{n} + \sin^{-1}\left(\frac{1}{n}\right)$$

cette plage $A_i$ étant déterminée par itération
et on fixe A étant dans une gamme allant d'une valeur non nulle à $A_i \pm 2°$
T' étant un angle de la caméra thermique avec l'horizontale et est nul ou est de préférence égal à T.

14. Dispositif selon l'une des revendications précédentes de dispositif **caractérisé en ce que** l'on détermine un angle $A_m$ optimal qui satisfait à l'équation suivante :

[Math 17]

$$A_m = \frac{\sin\left(\frac{\theta}{2} - \sin^{-1}\left(n\sin\left(A_m - \sin^{-1}\left(\frac{\sin\left(\frac{\pi}{2} - \alpha\right)}{n}\right)\right)\right)\right)}{n} + \sin^{-1}\left(\frac{1}{n}\right)$$

Am étant déterminé par itération
et on fixe A= $A_m \pm 2°$ et A non nul.

15. Véhicule routier ou ferroviaire, notamment autonome ou semi-autonome, intégrant ledit élément vitré selon l'une des revendications précédentes d'élément vitré ou intégrant ledit dispositif selon l'une des revendications précédentes de dispositif.

**Patentansprüche**

1. Verglastes Element (100 bis 600), umfassend:

   - eine Verglasung eines Fahrzeugs, insbesondere eines Kraftfahrzeugs oder einer Bahn, insbesondere eine Windschutzscheibe, Heckscheibe, Seitenverglasung, einer gegebenen Dicke E1, wobei die Verglasung eine äußere Hauptseite (11), die dafür bestimmt ist, nach außen gerichtet zu sein, und eine innere Hauptseite (14), die dafür bestimmt ist, auf der Seite des Fahrzeuginnenraums zu sein, besitzt, die Verglasung aufweisend vorzugsweise in einem Umfangsbereich, der vorzugsweise in einem oberen Teil der Verglasung liegt, ein Durchgangsloch zwischen der inneren Seite und der äußeren Seite, wobei das Loch durch eine Seitenwand der Verglasung begrenzt wird,

- in dem Durchgangsloch einen Einsatz (2) aus einem Material, das in einem Bereich LB von Wellenlängen im Infrarotspektrum über 2,5 μm, mindestens von 9,5 bis 10,5 μm und vorzugsweise von 8 bis 12 μm, transparent ist, aus einem Material mit einem Brechungsindex n in dem Bereich LB, mit einer inneren Seite (21) und einer äußeren Seite (22), wobei der Einsatz vorzugsweise eine kreisförmige oder nahezu kreisförmige Form hat,

**dadurch gekennzeichnet, dass** die innere Seite (21) und die äußere Seite (22) einen Scheitelwinkel A ungleich null ausbilden, wobei der Einsatz (2) eine variable Dicke e besitzt, die in Richtung des oberen Randes der Verglasung abnimmt.

2. Verglastes Element nach dem vorstehenden Anspruch,
**dadurch gekennzeichnet, dass** die variable Dicke e in einem Bereich von 3 bis 10 mm liegt.

3. Verglastes Element nach einem der vorstehenden Ansprüche,
**dadurch gekennzeichnet, dass** die innere Seite (21) einen Winkel A0 ungleich null mit der inneren Seite (14), insbesondere A0 gleich A±2° ist, ausbildet und/oder die äußere Seite (22) parallel oder koplanar mit der äußeren Seite (11) ist oder einen Winkel von höchstens 2° mit der äußeren Seite (11) ausbildet.

4. Verglastes Element nach einem der vorstehenden Ansprüche,
**dadurch gekennzeichnet, dass** A mindestens 2° und höchstens 30° beträgt.

5. Verglastes Element nach einem der vorstehenden Ansprüche,
**dadurch gekennzeichnet, dass** das Material des Einsatzes (2) eine optische Infrarotübertragung von mindestens 30 % und besser mindestens 40 % und noch besser mindestens 60 %, 65 % oder 70 % in dem Bereich LB und vorzugsweise eine Lichtdurchlässigkeit von mindestens 25 % bei einer Referenzwellenlänge zwischen 500 nm und 600 nm und sogar in einem Bereich B von 550 nm bis 600 nm vorweist.

6. Vorrichtung, aufweisend:

- verglastes Element (100 bis 600) nach einem der vorstehenden Ansprüche, wobei die Verglasung, insbesondere die Windschutzscheibe, insbesondere eine Neigung, die durch einen Winkel α in Bezug auf die Horizontale in der montierten Position definiert ist, vorweist
- eine sogenannte Wärmebildkamera (9), die auf der inneren Seite (14), die dem Einsatz gegenüberliegt, angeordnet ist, um eine elektromagnetische Strahlung zu empfangen, nachdem sie den Einsatz durchquert hat, die Wärmebildkamera umfassend eine insbesondere kreisförmige Pupille (91) und ein Infraroterfassungssystem in dem Bereich LB, wobei die Wärmebildkamera durch einen vertikalen Blickwinkel θ von mindestens 10° und insbesondere von höchstens 60° oder 50° definiert ist.

7. Vorrichtung nach dem vorstehenden Anspruch,
**dadurch gekennzeichnet, dass** die Wärmebildkamera ferner durch eine optische Achse X, die durch den Mittelpunkt C der Pupille verläuft, definiert ist, wobei die Wärmebildkamera einen positiven Neigungswinkel T mit einer horizontalen Achse X0 vor der innere Seite ausbildet, wobei die Wärmebildkamera nach oben geneigt ist.

8. Vorrichtung nach dem vorstehenden Anspruch,
**dadurch gekennzeichnet, dass** bei Definieren eines Strahls R, der auf die äußere Seite (22) in einer horizontalen Richtung einfällt, R dann bei seinem Durchgang durch den Einsatz gebrochen wird, wobei $D_0$ der Winkel der Ablenkung des Strahls R durch den Einsatz (2) ist und definiert ist durch:

[Math 15]

$$D_O = \frac{\pi}{2} - \alpha + \sin^{-1}\left(n \sin\left(A - \sin^{-1}\left(\frac{\sin\left(\frac{\pi}{2} - \alpha\right)}{n}\right)\right)\right) - A$$

wobei T so gewählt ist, dass T $D_0\pm$ 10° beträgt und dabei positiv bleibt.

9. Vorrichtung nach einem der Ansprüche 7 oder 8,
   **dadurch gekennzeichnet, dass** T mit der Horizontalen X0 einen Winkel von höchstens 30°, besser höchstens 20°, ausbildet.

10. Vorrichtung nach einem der vorstehenden Ansprüche einer Vorrichtung,
    **dadurch gekennzeichnet, dass** die Wärmebildkamera (9) vor dem Einsatz angeordnet ist, so dass bei der Definition eines tangential zu der äußeren Seite (22) einfallenden Strahls, der in dem Einsatz gebrochen wird und aus der inneren Seite (21) des Einsatzes austritt, ein Winkel $\theta_1$ mit der optischen Achse X ausgebildet wird, wobei $\theta_1$ größer als oder gleich 0,7$\theta$/2, vorzugsweise größer als oder gleich 0,9$\theta$/2, ist, wobei der Strahl tangential in der vertikalen Ebene, die X enthält, einfällt und aus einem unteren Bereich, unterhalb des Einsatzes, eintrifft.

11. Vorrichtung nach einem der vorstehenden Ansprüche der Vorrichtung,
    **dadurch gekennzeichnet, dass** die äußere Seite (22) in ein Rechteck, das ein Zentrum M' definiert, das der Schnittpunkt der Diagonalen des Rechtecks ist, aufgenommen ist, indem ein Strahl R' definiert wird, der auf die äußere Seite (22) in einer horizontalen Richtung, die durch das Zentrum M' verläuft, der bei seinem Durchgang durch den Einsatz gebrochen wird, einfällt, wobei der Strahl R' durch die Pupille gesammelt wird und vorzugsweise um höchstens 5 mm oder sogar höchstens 2 mm von dem Zentrum C entfernt ist.

12. Vorrichtung nach einem der vorstehenden Ansprüche der Vorrichtung,
    **dadurch gekennzeichnet, dass** die Wärmebildkamera nach oben geneigt ist, insbesondere entlang T, und die Kamera näher als der minimale Annäherungsabstand, der dem der Kamera in der Horizontalen entspricht, angeordnet ist.

13. Vorrichtung nach einem der Ansprüche 7 bis 12,
    **dadurch gekennzeichnet, dass** ein Bereich von Werten für $A_i$ bestimmt wird, die die folgende Gleichung erfüllen:

[Math 16]

$$A_i \leq \frac{\sin(\frac{\pi}{2} + \frac{\theta}{2} - T' - \alpha - A_i)}{n} + \sin^{-1}\left(\frac{1}{n}\right)$$

wobei dieser Bereich $A_i$ durch Iteration bestimmt wird und festgelegt wird, dass A in einem Bereich von einem Wert ungleich null bis $A_i\pm$2° liegt,
wobei T' ein Winkel der Wärmebildkamera mit der Horizontalen ist und null oder vorzugsweise gleich T ist.

14. Vorrichtung nach einem der vorstehenden Ansprüche der Vorrichtung,
    **dadurch gekennzeichnet, dass** ein optimaler Winkel $A_m$ bestimmt wird, der die folgende Gleichung erfüllt:

[Math 17]

$$A_m = \frac{\sin\left(\frac{\theta}{2} - \sin^{-1}\left(n\sin\left(A_m - \sin^{-1}\left(\frac{\sin\left(\frac{\pi}{2} - \alpha\right)}{n}\right)\right)\right)\right)}{n} + \sin^{-1}\left(\frac{1}{n}\right)$$

wobei Am durch Iteration bestimmt wird
und A= $A_m\pm$2° und A ungleich null festgelegt wird.

15. Straßen- oder Schienenfahrzeug, insbesondere autonom oder teilautonom, das das verglaste Element nach einem der vorstehenden Ansprüche des verglasten Elements integriert oder die Vorrichtung nach einem der vorstehenden Ansprüche der Vorrichtung integriert.

**Claims**

1. A glazed element (100 to 600) comprising:

   - a vehicle glazing, particularly automobile or railroad, particularly windshield, rear window, side glazing, of a given thickness E1, the glazing having an external main face (11) intended to be oriented toward the exterior and an internal main face (14) intended to be on the passenger compartment side, the glazing comprising, preferably in a peripheral area which preferably is the upper part of the glazing, a through-hole between the internal face and the external face, a hole delimited by a side wall of the glazing,
   - in said through-hole, an insert (2) made of material that is transparent in an LB range of wavelengths in the infrared spectrum above 2.5 μm, ranging at least from 9.5 μm to 10.5 μm and preferably from 8 to 12 μm, being made of material of refractive index n in the LB range, with an interior face (21) and an exterior face (22), the insert preferably being circular or quasi-circular in shape,

   **characterized in that** the interior (21) and exterior (22) faces form a non-zero angle at the apex A, the insert (2) having a thickness e that is variable and decreasing toward the upper edge of the glazing.

2. The glazed element according to the preceding claim, **characterized in that** the variable thickness e is within a range of from 3 to 10 mm.

3. The glazed element according to one of the preceding claims, **characterized in that** the interior face (21) forms a non-zero angle A0 with the internal face (14), in particular A0 equals A$\pm$ 2° and/or the exterior face (22) is parallel or coplanar with the external face (11) or forms an angle of at most 2° with the external face (11).

4. The glazed element according to one of the preceding claims, **characterized in that** A is at least 2° and at most 30°.

5. The glazed element according to one of the preceding claims, **characterized in that** the material of the insert (2) has an infrared optical transmission of at least 30% and better at least 40% and even better at least 60%, 65% or 70% in the LB range and preferably a light transmission of at least 25% at a reference wavelength of between 500 nm and 600 nm and even in a B range of 550 nm to 600 nm.

6. A device comprising:

   - the glazed element (100 to 600) according to one of the preceding claims, the glazing, particularly a windshield, having particularly an inclination defined by an angle $\alpha$ relative to the horizontal in mounted position
   - a so-called thermal camera (9), arranged on the internal face side (14), facing the insert, in such a way as to receive electromagnetic radiation after passage through the insert, the thermal camera comprising a pupil (91), particularly circular, and an infrared detection system in the LB range, the thermal camera being defined by a vertical angle of view $\theta$ of at least 10° and in particular at most 60° or 50°.

7. The device according to the preceding claim, **characterized in that** the thermal camera being further defined by an optical axis X passing through the center C of the pupil, the thermal camera forms a positive angle of inclination T with a horizontal axis X0, upstream from the internal face, the thermal camera being tilted upward.

8. The device according to the preceding claim, **characterized in that** by defining a ray R incident to the exterior face (22) in a horizontal direction, R then being refracted during its passage through the insert, $D_0$ being the angle of deflection by the insert (2) of the ray R and defined by:

   [Math 15]

$$D_O = \frac{\pi}{2} - \alpha + \sin^{-1}\left( n \sin\left( A - \sin^{-1}\left( \frac{\sin\left(\frac{\pi}{2} - \alpha\right)}{n} \right) \right) \right) - A$$

   T is chosen such that T equals $D_0 \pm 10°$ while remaining positive.

9. The device according to one of claims 7 or 8, **characterized in that** T forms and angle of at most 30° better at most 20° with the horizontal X0.

10. The device according to one of the preceding device claims, **characterized in that** the thermal camera (9) is arranged facing the insert in such a way that by defining an incident ray tangential to the exterior face (22), refracted in the insert, and emerging from the interior face (21) of the insert forming an angle $\theta_1$ with the optical axis X, $\theta_1$ is greater than or equal to $0.7\theta/2$, preferably greater than or equal to $0.9\theta/2$, tangential incident ray in the vertical plane that contains X and arriving from a lower area, below the insert.

11. The device according to one of the preceding device claims, **characterized in that** the exterior face (22) is inscribed within a rectangle defining a center M' which is the intersection of the diagonals of said rectangle, defining a ray R' incident to the exterior face (22) in a horizontal direction passing through said center M' refracted during its passage through the insert, the ray R' is collected by the pupil and preferably is located at most 5 mm or even at most 2 mm away from the center C.

12. The device according to one of the preceding device claims, **characterized in that** the thermal camera is tilted upward particularly according to T and the camera is placed nearer than the minimum approach distance corresponding to that of the camera when horizontal.

13. The device according to one of claims 7 to 12, **characterized in that** a range of values of $A_i$ is determined that satisfy the following equation:

[Math 16]

$$A_i \leq \frac{\sin\left(\frac{\pi}{2} + \frac{\theta}{2} - T' - \alpha - A_i\right)}{n} + \sin^{-1}\left(\frac{1}{n}\right)$$

this range $A_i$ being determined by iteration
and A being set within a range of from a non-zero value to $A_i \pm 2°$
T' being an angle of the thermal camera with the horizontal and is zero or is preferably equal to T.

14. The device according to one of the preceding device claims, **characterized in that** an optimal angle $A_m$ is determined that satisfies the following equation:

[Math 17]

$$A_m = \frac{\sin\left(\frac{\theta}{2} - \sin^{-1}\left(n \sin\left(A_m - \sin^{-1}\left(\frac{\sin\left(\frac{\pi}{2} - \alpha\right)}{n}\right)\right)\right)\right)}{n} + \sin^{-1}\left(\frac{1}{n}\right)$$

$A_m$ being determined by iteration
and $A = A_m \pm 2°$ and A being non-zero are set.

15. A road or railway vehicle, particularly autonomous or semi-autonomous, incorporating said glazed element according to one of the preceding glazed element claims or incorporating said device according to one of the preceding device claims.

Fig.1

Fig.2

Fig.3

**Fig.4**

**Fig.4'**

## Fig.5

## Fig.6

Fig.7

Fig.8

**EP 4 157 632 B1**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- GB 2271139 A

- US 6132882 A

**Littérature non-brevet citée dans la description**

- **OSIPKOV.** *IOP conf. Ser. Material Science and Engineering,* 2015, vol. 74, 012013